# EUROPEAN PATENT SPECIFICATION

(11) **EP 1 925 069 B1**
(45) Date of publication and mention of the grant of the patent: **12.10.2016**
(21) Application number: 06735817.6
(22) Date of filing: 21.02.2006
(51) Int. Cl.: H02K 21/04, H02K 21/38, H02K 99/00

(54) **DC INDUCTION ELECTRIC MOTOR GENERATOR**
ELEKTRISCHER GLEICHSTROM-INDUKTIONSMOTOR-GENERATOR
MOTEUR/GENERATEUR ELECTRIQUE C.C. A INDUCTION

(30) Priority: 22.08.2005 US 209525
(43) Date of publication of application: 28.05.2008
(73) Proprietor: Clearwater Holdings, Ltd., Carson City NV 89701 (US)
(72) Inventor: Bojiuc, Dimitru, Marina del Rey, CA 90292 (US)
(74) Representative: Hocking, Adrian Niall
(86) International application number: PCT/US2006/006311
(87) International publication number: WO 2007/024261

(56) References cited:
- DE-A1- 19 810 566
- FR-A- 620 077
- US-A- 2 159 768
- US-A- 2 762 939
- US-A- 3 729 642
- US-A- 4 978 878
- US-A1- 2003 201 686

## Description

### Background

### Related Applications

This application claims international priority from a prior filed U.S. Utility Patent Application having serial no. 11209525 and entitled "DC Induction Electric Motor Generator" filed on 8/22/05.

### Field of the Present Disclosure

This disclosure relates generally to electric motor-generators and more particularly to a DC rotating electromagnetic machine operating by induction.

### Description of Related Art

The following art defines the present state of the field of the apparatus described and claimed herein:

FR 620 077 A to Ducellier ETS discloses an ignition generator with an outer stator and an inner stator with a rotor coaxially arranged between the inner and outer stators. An inductor coil is wound around the center of the inner stator.

US 2003/0201686 to Narita Kenji et al discloses an induction motor having a cylindrical outer stator and an inner stator with a rotor coaxially arranged between the inner and outer stators. A winding for generating a rotating magnetic field is wound around the inner and outer stators. A two-layer radial air gap between the stators and the rotor improves the efficiency of the motor by increasing the ratio of the torque/(square current).

DE 198 10 566 A1 to Eckert Frank discloses a synchronous generator and/or motor, in which the rotors have electrically and mechanically connected rotating field windings which generate rotating fields rotating in opposite directions. In a motor mode of operation, the stator windings are subjected to alternating voltage of variable frequency and depending on the frequency different, a free torque arises at the connected rotors. In a generator mode of operation, an external torque in the direction of rotation engages the connected rotors or the machine axle, which in the non-independently excited part of the stator winding, generates a voltage that can be tapped off with a frequency that depends on the rotor speed, excitation frequency and the pole pair number of the stator and excitation windings.

However, the prior art fails to teach a rotating electromagnetic machine that provides electromagnetic fields immersed in monopole permanent magnet fields of opposite polarities as is shown in the present apparatus and which provides operation by induction.

### Summary

According to the invention, there is provided an electromagnetic apparatus comprising a linear-toroidal ferromagnetic core, the core fixtured for rotation between permanent magnets wherein two permanent magnets are located externally and two permanent magnets are located internally on stator supports, the two internal permanent magnets providing a south pole sector and a north pole sector, the south pole sector and the north pole sector being engaged by a central portion joining the pole sectors and being arranged cylindrically about the central portion, the two external permanent magnets providing a further south pole sector and a further north pole sector, said two external permanent magnets being arranged cylindrically and coaxially with the two internal permanent magnets, with the north pole sector of the internal permanent magnets and the north pole sector of the external permanent magnets mutually adjacent, and an induction coil wound about the central portion and providing at least one tap, *characterised in that* the ferromagnetic core is wound with a plurality of independent, radially oriented, spaced apart, short-circuited solenoid coils, wherein the solenoid coils are placed within the core.

Preferably, a first pair of the two external and two internal permanent magnets are placed with north poles adjacent thereby, by proximity, inducing opposing south pole in a portion of the ferromagnetic core and where a second pair of the two external and two internal permanent magnets are placed with south poles adjacent thereby, by proximity, inducing a north pole in a second portion of the ferromagnetic core.

Other features and advantages of the described apparatus and method of use will become apparent from the following more detailed description, taken in conjunction with the accompanying drawings, which illustrate, by way of example, the principles of the presently described apparatus and method of its use.

### Brief Description of the Drawings

The accompanying drawings illustrate at least one of the best mode embodiments of the present apparatus and method of it use. In such drawings:
Figure 1 is a vertical cross-sectional view taken in the lateral direction of the apparatus according to the invention; and
Figure 2 is a vertical cross-sectional view taken in the longitudinal direction thereof.

### Detailed Description

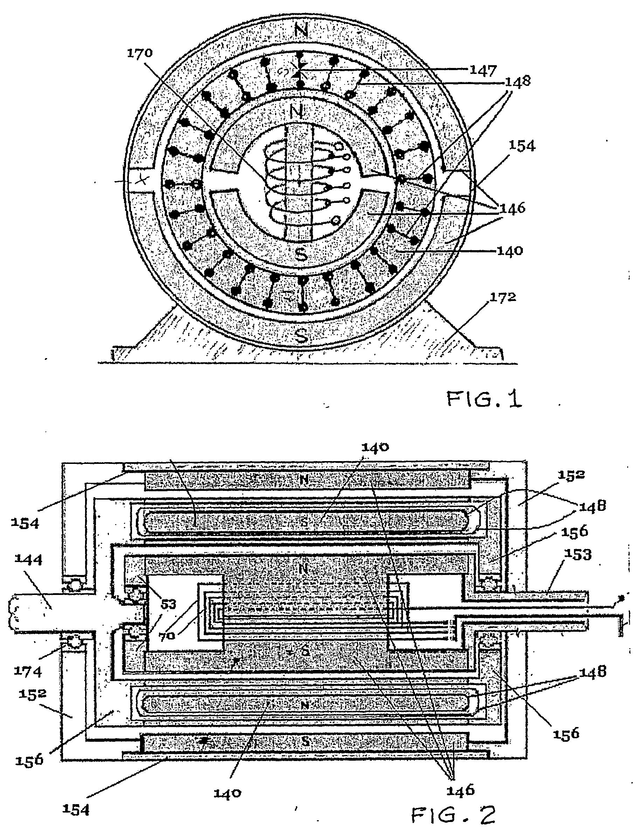

Fig. 1 is a cross-sectional view of an embodiment of the apparatus defined in U.S. application serial number 11200920 of which the present application is a Continuation-In-Part and which operates under the same principle; in which the linear-toroidal ferromagnetic core 140 has a shorted electric motor-generator solenoid coil 148, and which is a rotating autotransformer rotating between the active permanent magnets located externally on the stator's permanent magnet ferromagnetic support 154 and that the internal wound active permanent magnet or electro-magnet, as I said the energy collector & inductor 170.

The embodiment of the invention provides a cylindrical orientation. The fix parts of this cylindrical linear-toroidal electric motor-generator are the same as in the discoidal embodiment, the active permanent magnets with their support, with the difference that the internal located active permanent magnet will have the energy collector & inductor 170 coil acting meantime as a transformer.

Operation of the present apparatus is determined by the moving part which in this case acts as a transfer bridge between the two active energetic suppliers.

The moving parts are the linear-toroidal ferromagnetic core 140 which, when rotating, each of its solenoid's coils independently have induced electric energy from the external permanent magnets and which then transfer by induction this energy to the inner stator's wound active permanent magnet, the energy collector and inductor 170, which, in this case acts as a generator.

To obtain a reverse effect, the energy collector and inductor 170 is fed a pulsed direct current at a selected frequency to produce a selected rotational speed. When charged by the induced electric energy from the internal energy collector and inductor 170, the coils of the ferromagnetic core have induced electric energy so that each solenoid becomes an active electromagnet. The coil unbalanced magnetic pull (UMP) north and south interact with the external permanent magnet UMP and also with a displacement of the ferromagnetic core with its own UMP which effect produces a sense of displacement of the rotor, as well as the mobile reversible mechanical transformer, the known electric motor.

The special feature of the presently described cylindrical version of the present apparatus does not use a commutator as this function is carried out by the energy collector and inductor 170".

## Claims

1. An electromagnetic apparatus comprising a linear-toroidal ferromagnetic core (140), the core fixtured for rotation between permanent magnets (146) wherein two permanent magnets are located externally and two permanent magnets are located internally on stator supports (154), the two internal permanent magnets (146) providing a south pole sector and a north pole sector, the south pole sector and the north pole sector being engaged by a central portion (24) joining the pole sectors and being arranged cylindrically about the central portion (24), the two external permanent magnets (146) providing a further south pole sector and a further north pole sector, said two external permanent magnets (146) being arranged cylindrically and coaxially with the two internal permanent magnets (146), with the north pole sector of the internal permanent magnets (146) and the north pole sector of the external permanent magnets (146) mutually adjacent, and an induction coil (170) wound about the central portion (24) and providing at least one tap, wherein the ferromagnetic core (140) is wound with a plurality of independent, radially oriented, spaced apart, short-circuited solenoid coils (148), wherein the solenoid coils (148) are placed within the core.

2. An electromagnetic apparatus as claimed in claim 1, wherein a first pair of the two external and two internal permanent magnets (146) are placed with north poles adjacent thereby, by proximity, inducing opposing south pole in a portion of the ferromagnetic core (140) and where a second pair of the two external and two internal permanent magnets are placed with south poles adjacent thereby, by proximity, inducing a north pole in a second portion of the ferromagnetic core (140).

## Patentansprüche

1. Elektromagnetische Vorrichtung, umfassend einen linear-ringförmigen, ferromagnetischen Kern (140), wobei der Kern zur Drehung zwischen Permanentmagneten (146) befestigt ist, wobei sich zwei Permanentmagneten außen befinden und sich zwei Permanentmagneten innen auf Drehmomentstützen (154) befinden, die zwei inneren Permanentmagneten (146) einen Südpolbereich und einen Nordpolbereich bereitstellen, der Südpolbereich und der Nordpolbereich mit einem Mittelabschnitt (24), der die Polbereiche miteinander verbindet und zylindrisch um den Mittelabschnitt (24) angeordnet ist, in Eingriff stehen, die zwei äußeren Permanentmagneten (146) einen weiteren Südpolbereich und einen weiteren Nordpolbereich bereitstellen, die zwei äußeren Permanentmagneten (146) zylindrisch und koaxial mit den zwei inneren Permanentmagneten (146) angeordnet sind, wobei der Nordpolbereich der inneren Permanentmagneten (146) und der Nordpolbereich der äußeren Permanentmagneten (146) aneinander angrenzen und eine Induktionsspule (170) um den Mittelabschnitt (24) gewickelt ist und wenigstens einen Abgriff bereitstellt, der ferromagnetische Kern (140) mit einer Mehrzahl von unabhängigen, radial ausgerichteten, in einem Abstand angeordneten, kurzgeschlossenen Magnetspulen (148) gewickelt ist, wobei die Magnetspulen (148) im Kern platziert sind.

2. Elektromagnetische Vorrichtung nach Anspruch 1, wobei ein erstes Paar der zwei äußeren und zwei inneren Permanentmagneten (146) mit Nordpolen angrenzend platziert wird, wodurch, aufgrund der Nähe, ein entgegengesetzter Südpol in einem Abschnitt des ferromagnetischen Kerns (140) hervorgerufen wird, und wobei ein zweites Paar der zwei äußeren und zwei inneren Permanentmagneten mit Südpolen angrenzend platziert wird, wodurch, aufgrund der Nähe, ein Nordpol in einem zweiten Abschnitt des ferromagnetischen Kerns (140) hervorgerufen wird.

## Revendications

1. Dispositif électromagnétique comprenant un noyau ferromagnétique linéaire toroïdale (140), le noyau étant fixé de façon à tourner entre les aimants permanents (146), deux aimants permanents étant situés à l'extérieur et deux aimants permanents étant situés à l'intérieur sur des supports de stator (154), les deux aimants permanents intérieurs (146) fournissant un secteur de pôle sud et un secteur de pôle nord, le secteur de pôle sud et le secteur de pôle nord étant engagés par une partie centrale (24) réunissant les secteurs de pôle et étant disposés de manière cylindrique autour de la partie centrale (24), les deux aimants permanents extérieurs (146) fournissant un autre secteur de pôle sud et un autre secteur de pôle nord, lesdits deux aimants permanents extérieurs (146) étant disposés de façon cylindrique et coaxiale par rapport aux deux aimants permanents intérieurs (146), le secteur de pôle nord des aimants permanents intérieurs (146) et le secteur de pôle nord des aimants permanents extérieurs (146) étant mutuellement adjacents et une bobine d'induction (170) étant enroulée autour de la partie centrale (24) et fournissant au moins un prise, le noyau ferromagnétique (140) étant enroulé avec une pluralité de bobines magnétiques (148) en court-circuit indépendante, orientée radialement et espacées les unes des autres, les bobines magnétiques (148) étant placés à l'intérieur du noyau.

2. Dispositif électromagnétique selon la revendication 1, dans lequel une première paire de deux aimants permanents extérieurs et de deux aimants permanents intérieurs (146) sont placés avec des pôles nord adjacents qui induisent ainsi, par proximité, un pôle sud opposé dans une partie du noyau ferromagnétique (140), et une seconde paire de deux aimants permanents extérieurs et de deux aimants permanents intérieurs étant disposés avec des pôles sud adjacents qui induisent ainsi, par proximité, un pôle nord dans une seconde partie du noyau ferromagnétique (140).
